# EUROPEAN PATENT SPECIFICATION

(11) **EP 1 289 632 B1**
(45) Date of publication and mention of the grant of the patent: **29.07.2009**
(21) Application number: 01934726.9
(22) Date of filing: 11.05.2001
(51) Int. Cl.: B01D 65/02, C02F 1/44, B01D 35/22

(54) **METHOD AND DEVICE FOR PURIFYING WATER**
VERFAHREN UND VORRICHTUNG ZUR REINIGUNG VON WASSER
PROCEDE ET DISPOSITIF D'EPURATION D'EAU

(30) Priority: 18.05.2000 SE 0001843
(43) Date of publication of application: 12.03.2003
(73) Proprietor: Dometic AB, 104 25 Stockholm (SE)
(72) Inventor: DELLBY, Frederik, 125 34 Älvsjö (SE); HAEGERMARCK, Anders, S-142 63 Trängsund (SE)
(74) Representative: Grosse - Schumacher - Knauer - von Hirschhausen
(86) International application number: PCT/SE2001/001037
(87) International publication number: WO 2001/087470

(56) References cited:
- EP-A- 0 995 482
- EP-B- 0 394 777
- WO-A-96/23733
- SE-C2- 503 918

## Description

This invention relates to a method and a device for purifying water, whereby an inflow of raw water is divided up into a purified outflow of water and a circulating rejected flow of concentrated unpurified water due to increased pressure and filtration by means of inverted osmosis, ultra- or nano-filtration or the like. The rejected flow of unpurified water is diverted to a sewage drain or the like.

Household water purifiers of the type mentioned above are previously known. These water purifiers are, in contrast to industrial desalination plants or the like, used in households in order to achieve clean drinking water from a well, a lake or other more or less contaminated water sources and also for decreasing the content of contamination when the water is tapped from municipal water mains. Often, the accessible water quantity is limited and/or has a comparatively high price, which means that it is desirable to keep the water consumption at a low level for this type of apparatus.

With the previously known water purifiers, for instance European Patent No. 555621, attempts have been made to limit the consumption of raw water by diverting a part of the rejected flow to a circulation circuit in order to maintain a large flow in the circuit to flush away the collected contamination from the membrane serving as a filter and to flush the circulation system with an excess flow of raw water, which leads directly to a sewage drain. In this case, the water consumption is considerable since the added raw water during the flushing operation is allowed to enter uncontrolled into the circulation circuit and the raw water when mixed successively dilutes the concentrated, unpurified water in the circulation circuit. Thus, the flushing occurs during a long time such that the concentration of contamination rises close to the level of the raw water and large water quantities exit to the sewage drain without being used. EP-A-0394777 discloses a process for the purification of washing water having a flusing procedure initiated if a salt concentration threshold is met. WO-A-9623733 discloses a process for water purification in which the concentrate cycle is permanently purged via a throttle and which has in addition in parallel a controlled drain valve operating dependent on the permeate concentration.

This invention achieves a method and a device that significantly reduce the water consumption and the connecting time of the device and that also improves the operation conditions of the apparatus. This is achieved by means of a device having a flushing process whereby after the clean water is tapped off, a flow of raw water is added to cause unpurified water in the circulating circuit to enter the sewage drain in a controlled manner as defined in claims 1 and 3.

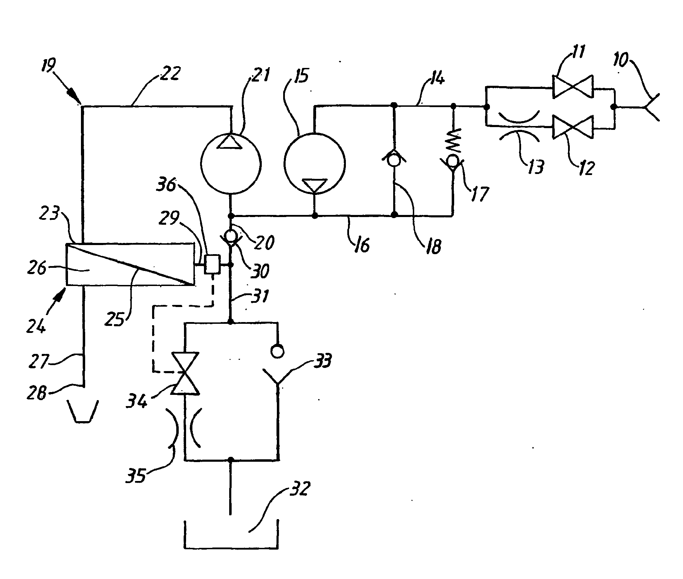

A fuller understanding of the invention may be had by referring to the following description and claims taken in conjunction with the accompanying drawing, wherein the drawing schematically shows the pipe or conduit system with the associated components.

An embodiment of the invention will now be described with reference to the accompanying drawing. The device according to the invention comprises a raw water inlet 10 through which the raw water flows into the purifier at a comparatively low pressure. The raw water might have been pre-treated, for instance by means of mechanical filters, chemical filters, carbon filters, UV filters and so on, before it flows into the purifier. The raw water inlet communicates with a pipe system comprising two valves 11 and 12 respectively which are connected in parallel. The first valve 11 is an inlet valve for the raw water during the time clean water is tapped off from the system. The second valve 12 is an inlet valve for the raw water during a following flush period. In series with the second valve, there also is an inlet flow restrictor device 13 giving a maximum flow of approximately 1-5 1/min. The first valve 11 and the flow restricting device 13 are, via a first pipe or conduit 14, connected to the inlet side of a pressure pump 15. The pressure pump 15 creates a pressure of about 10 bar at a flow of approximately 61/min when activated. The outlet of the pressure pump is connected to a second conduit 16 which is also connected to the first conduit 14 by means of a relief valve 17 and an inlet check valve 18. The relief valve 17 is arranged to admit an overflow of water from the second conduit 16 to the first conduit 14 if the pressure should become too great in the second conduit 16. The inlet check valve 18 is arranged to open for the water flow from the first conduit 14 to the second conduit 16 when the pressure in the second conduit 16 sinks to a level which is below the pressure level which is maintained in the first conduit 14.

The second conduit 16 is also connected to a circulation circuit 19 comprising a third conduit 20 connected to the inlet side of a circulation pump 21, which, in the example shown, gives a flow of approximately 40 1/min and whose outlet side, by means of a fourth conduit 22, is connected to a filter inlet 23 of a filter housing 24 (not shown). The circulation pump 21 and the pressure pump 15 are preferably arranged on a common shaft which is driven by an electric motor. The filter housing 24 comprises an osmotic filter, designed as a membrane 25 or some other type of filter such as ultra or nanofilter, through which the water is forced by fluid pressure towards a container 26 for clean water placed on the other side of the membrane. The container, via a fifth conduit 27, is directly connected to a tapping point 28.

The filter housing 24 is also is provided with a reject or waste water outlet 29 through which concentrated, unpurified water can flow to the third conduit 20 of the circulation circuit via a circulation check valve 30 or to a sixth conduit 31. The sixth conduit 31 can be connected to a sewage drain 32 either via a flow controlled valve 33 arranged to block the connection when the flow exceeds approximately 2 1/min or by means of an electrically controlled valve 34, which is connected in series with an outlet flow restricting device 35 limiting the flow to approximately 3 1/min at 10 bar. The flow controlled valve 33 directs the water to the sewage drain in a bistable manner, i.e., the water flows to the sewage drain either unrestricted or heavily restricted, depending on a preset value of the relation between the pressure and the flow.

In the circulation circuit 19, at the reject outlet 29, an electrically conductive sensor 36 or some other type of sensor is arranged. This sensor measures the concentration of contaminants in the circulation circuit. The sensor 36 is electrically connected to the electric valve 34 such that the valve opens when the concentration has reached a predetermined level, which for instance might be twice the level of the raw water. The sensor preferably is designed such that it is calibrated at certain intervals. This could be done by using the concentration content in the raw water as a reference value where the reference value is achieved by means of an extended flushing process.

The device operates in the following manner. When purified water is to be tapped off at point 28, the pressure pump 15 and the circulation pump 21 are activated at the same time that the valve 11 is opened. The water flowing through the raw water inlet 10 will flow through the first conduit 14 and be pressurized by the pressure pump 15 to approximately 10 bar and will flow out in the second conduit 16. Normally, the backflow of the water from the second conduit 16 to the first conduit 14 is prevented by means of the two valves 17 and 18. Consequently, the water flows into the circuit 19 via the third conduit 20 at the same time that water momentarily flows out through the sixth conduit 31 to the sewage drain 32 via the outlet flow controlled valve 33 (the valve 34 is in this moment closed). Since the flow quickly reaches 2 l/min, the outlet flow controlled valve 33 closes and raw water continues to flow into the circulation circuit 19 through the third conduit 20. The circulation pump pumps the water through the fourth conduit 22 and into the filter housing 24 via the filter inlet 23. Because of the pressure of the water over the membrane 25 in the filter housing, purified water will be forced by fluid pressure through the membrane to the space 26 on the other side of the membrane from which it leaves through the fifth conduit 27, with a flow of approximately 1-3 1/min, to the tap point 28. Contaminants and particles dissolved in the water are deposited on the membrane such that the concentration of contaminants in the circulation circuit 19 successively rises. The so-called reject water, i.e., the water which does not flow through the membrane, continues to flow through the reject outlet 29 and through the conduit 20 and the check valve 30 back to the circulation pump 21. Thus, the membrane is pressurized to 10 bar and is flushed with approximately 40 1/min through the circulation circuit. In the outlet for purified water, the flow is now approximately 2 1/min whereas the water becomes increasingly contaminated in the circulation circuit 19.

When the sensor 36 detects a certain increase of the concentration of contaminants, e.g., doubled, the electrically controlled valve 34 is opened and admits approximately 3 1/min to leave via the outlet flow restrictor 35 to the sewage drain 32. After a certain period of time, the decreased concentration of contaminants is detected by the sensor 36, which then closes the valve 34. The process is then repeated as long as water is tapped from the tapping point 28. Thus, the electrically controlled valve 34 is only opened when the sensor 36 detects a need. This is very advantageous in terms of efficiency, since the need for flushing may vary widely depending on temperature, the condition of the membrane, the water quality and so on.

When the water tapping at point 28 is stopped, the pumps 15 and 21 stop at the same time, the valve 11 closes, and the valve 34 opens. The purified water in the container 26 and in the fifth conduit 27 flows back to the unfiltered or dirty side of the membrane 25 because of osmotic reaction since the fifth conduit 27 is directly connected to the atmosphere via the open tap point 28. This means that a corresponding volume of unpurified water is directed to the sewage drain 32 via the valve 34. When this flow ceases, the valve 11 will open. In the given example, this will occur within a few minutes. This back flow cleanses the surface of the membrane but is not sufficient for taking away all of the dirty water in the circulation circuit 19.

A few minutes after the pumps have been stopped, preferably approximately 5 minutes, a flushing operation starts by opening the valve 12. This flushing occurs with the pressure present in the raw water inlet (i.e., usually the tap water pressure) and at a flow that is controlled by the flow restrictor 13, i.e., in the present case, approximately 1-51/min. Thus, the water flows from the first conduit 14 via the check valve 18 into the second conduit 16 and further through the third conduit 20 and the circulation pump 21, thereby forcing the contaminated water in the fourth conduit 22 towards the filter housing 24 through the filter inlet 23, via the unfiltered or dirty side of the membrane 25, and finally through the reject outlet 29, the conduit 31, and the open valve 33 towards the sewage drain 32. Since the flow controlled valve 33 is in the open position, the system will be out of pressure which means that purified water will not leave the open tap point 28. It should in this connection be mentioned that since the tap point 28 does not have an outlet valve, the outlet opening of the tap point has to be placed at a higher level than the sewage drain 32 to avoid siphoning. The valve 12 may be time controlled such that a suitable amount of water is admitted to enter into the system. This raw water quantity should mainly be of the same size as the amount of unpurified water that is present in the circulating system, but it is of course also possible to add an excess amount of water whereby this excess amount has to be less than twice the amount of unpurified water that is present in the circulating system. The added amount of water can also be controlled by measuring the concentration content by means of the sensor 36. The valve 12 is closed when the concentration content of contaminants comes close to the value of the raw water or when the decrease of the concentration content ceases.

It should be mentioned that the pressure and flow values given above as well as the concentration values only are mentioned as examples and that the values might vary extensively without leaving the principles of the invention.

By means of the mentioned system, a minimum loss of water to the sewage drain is achieved under all operation conditions at the same time as the water which is taken out from the tap point is always relatively clean. Also, the flushing takes place almost without any noise since the pumps are not activated.

## Claims

1. A method for purifying water, whereby an inflow of raw water due to increased pressure and filtration by means of inverted osmosis, ultra- or nano-filtration or the like is divided up in a purified outflow of water and a circulating rejected flow with concentrated unpurified water from which rejected unpurified water is diverted to a sewage drain or the like, **characterized in that** when purified water has been tapped off, a flushing process is initiated whereby raw water without pressure increase is added by an amount which is less than twice the amount of the unpurified water in the circulating circuit, and is mainly as large as said amount of unpurified water, before the flushing process is interrupted, whereby the raw water mainly without dilution of the concentrated unpurified water in the circulation circuit expels a major part of the unpurified water to the sewage,
whereas the flushing process is controlled by control of the flow of rejected water into said drain (32)
whereas the flow of rejected water is in a first step controlled by means of a flow control valve (33), such that rejected water flows unrestricted to the sewage drain until a preset value of the flow is reached and such that the flow of rejected water into the sewage drain is then heavily restricted,
whereas the flow of rejected water is then in a second step controlled depending on the concentration of contaminants measured with a sensor (36) measuring the contamination of the circulating rejected flow and an electrically controlled valve (34) such that rejected water is admitted to flow into the sewage drain if the concentration of contaminants has reached a predetermined value and until the concentration has decreased .

2. A method according to claim 1, **characterized in that** the flushing process is controlled such that the process is activated after a predetermined time after the purified water has been tapped off.

3. A device for carrying out the method according to claim 1 comprising a raw water inlet (10) which via a pressurizing pump (15) is connected to a filter housing (24) in order to achieve an increased pressure of the water in the filter housing; the filter housing containing a filter inlet (23), an outlet conduit (27) for purified water and a reject outlet (29) which is connected to a first branched off conduit (20) connected to the filter inlet (23) in order to form a circulation circuit (19) for concentrated unpurified water; the circulation circuit also containing a circulation pump (21) and a second branched off conduit (31) connected to a sewage drain (32) for exiting unpurified water **characterized in that** the device comprises means for flushing (12, 18, 30) wherein when the pumps (15, 21) are not activated, the raw water inlet is connected to the circulation circuit (19) and thereby the raw water is forced in the direction towards and through the filter inlet (23) in order to expel the major part of the concentrated unpurified water in the circulation circuit to the sewage drain (32) whereby the second branched off conduit (31) connected to the sewage drain (32) is provided with a flow controlled valve (33) and an electrically controlled valve (34) which is controlled by a sensor (36) for the contamination content connected to the circulation circuit (19), which is located in the reject water outlet (29).

4. A device according to claim 3, **characterized in that** said means (12, 18, 30) comprises at least one valve.

5. A device according to claim 3, **characterized in that** the flow controlled valve (33) is connected parallel to the electrically controlled valve (34) and a first flow restrictor (35) is connected in series with the electrically controlled valve.

6. A device according to any of claims 3-5, **characterized in that** said means (12, 18, 30) comprises a time controlled inlet valve (12) and a second flow restrictor (13) connected in series with the time controlled inlet valve.

7. A device according to claim 6, **characterized in that** said sensor (36) is a conductive sensor.

## Patentansprüche

1. Verfahren zum Reinigen von Wasser, bei dem ein Zustrom von unbehandeltem Wasser, aufgrund erhöhtem Druck und Filtrierung mittels Umkehrosmose, Ultra- oder Nanofiltrierung oder dergleichen aufgeteilt wird, und zwar in einen gereinigten Abstrom von Wasser und einen zirkulierenden Absonderungsstrom mit konzentriertem ungereinigten Wasser, wobei aus diesem Absonderungsstrom abgesondertes ungereinigtes Wasser in einen Abwasserkanal oder dergleichen abgeleitet wird, **dadurch gekennzeichnet, dass**, wenn gereinigtes Wasser abgezapft wurde, ein Spülprozess eingeleitet wird, bei dem unbehandeltes Wasser ohne Druckerhöhung in einer Menge hinzugefügt wird, die weniger als die doppelte Menge des ungereinigten Wassers im Zirkulationskreislauf beträgt, und die im Wesentlichen genauso groß wie die Menge des ungereinigten Wassers ist, bevor der Spülprozess unterbrochen wird, wobei das unbehandelte Wasser, im Wesentlichen ohne Verdünnung des konzentrierten ungereinigten Wassers im Zirkulationskreislauf, einen Hauptteil des ungereingten Wassers zum Abwasserkanal heraustreibt,
wobei dabei der Spülprozess durch Steuern des Flusses des abgesonderten Wassers in den Abwasserkanal (32) gesteuert wird,
wobei dabei der Strom des abgesonderten Wassers bei einem ersten Schritt mittels eines Strömungssteuerventils (33) gesteuert wird, derart, dass abgesondertes Wasser unbeschränkt zum Abwasser-Abflusskanal strömt, bis ein voreingestellter Strömungswert erreicht wird, und derart, dass der Strom des abgesonderten Wassers in den Abwasser-Abflusskanal dann stark begrenzt wird,
wobei dabei der Strom des abgesonderten Wassers dann bei einem zweiten Schritt in Abhängigkeit von der Konzentration von Verunreinigungen, die mit einem Sensor (36) gemessen werden, der die Verunreinigung des zirkulierenden abgesonderten Stroms misst, und einem elektrisch gesteuerten Ventil (34) reguliert wird, so dass dem abgesonderten Wasser ein Einströmen in den Abwasser-Abflusskanal gestattet wird, falls die Konzentration von Verunreinigungen einen vorbestimmten Wert erreicht hat und bis die Konzentration abgenommen hat.

2. Verfahren nach Anspruch 1, **dadurch gekennzeichnet, dass** der Spülprozess derart gesteuert wird, dass der Prozess nach einer vorbestimmten Zeit nach Abzapfen des gereinigten Wassers aktiviert wird.

3. Vorrichtung zum Ausführen des Verfahrens nach Anspruch 1, aufweisend einen Einlass (10) für unbehandeltes Wasser, der über eine Druckbeaufschlagungspumpe (15) mit einem Filtergehäuse (24) verbunden ist, um einen erhöhten Wasserdruck im Filtergehäuse zu erzielen; wobei das Filtergehäuse einen Filtereinlass (23), eine Auslassleitung (27) für gereinigtes Wasser und einen Absonderungsauslass (29) enthält, der mit einer ersten Abzweigleitung (20) verbunden ist, die mit dem Filtereinlass (23) verbunden ist, um einen Zirkulationskreislauf (19) für konzentriertes ungereinigtes Wasser zu bilden; wobei der Zirkulationskreislauf auch eine Zirkulierpumpe (21) und eine zweite Abzweigleitung (31) enthält, die mit einem Abwasser-Abflusskanal (32) zum Abführen von ungereinigtem Wasser verbunden ist, **dadurch gekennzeichnet, dass** die Vorrichtung Spüleinrichtungen (12, 18, 30) aufweist, wobei, wenn die Pumpen (15, 21) nicht aktiviert sind, der Einlass für unbehandeltes Wasser mit dem Zirkulierkreislauf (19) verbunden ist und **dadurch** das unbehandelte Wasser in Richtung zum Filtereinlass (23) und durch diesen hindurch gedrängt wird, um den Hauptteil des konzentrierten ungereinigten Wassers im Zirkulierkreislauf in den Abwasser-Abflusskanal (32) auszutreiben, wobei die zweite Abzweigleitung (31), die mit dem Abwasser-Abflusskanal (32) verbunden ist, mit einem strömungsgesteuerten Ventil (33) und einem elektrisch gesteuerten Ventil (34) versehen ist, das durch einen Sensor (36) für den Verunreinigungsgehalt, der mit dem Zirkulationskreislauf (19) verbunden ist, der sich im Absonderungswasserauslass (29) befindet, gesteuert wird.

4. Vorrichtung nach Anspruch 3, **dadurch gekennzeichnet, dass** die Einrichtung (12, 18, 30) mindestens ein Ventil aufweist.

5. Vorrichtung nach Anspruch 3, **dadurch gekennzeichnet, dass** das strömungsgesteuerte Ventil (33) parallel zum elektrisch gesteuerten Ventil (34) angeschlossen ist und eine erste Strömungsbegrenzungseinrichtung (35) in Reihe mit dem elektrisch gesteuerten Ventil angeschlossen ist.

6. Vorrichtung nach einem der Ansprüche 3 bis 5, **dadurch gekennzeichnet, dass** die Einrichtung (12, 18, 30) ein zeitgesteuertes Einlassventil (12) und eine zweite Strömungsbegrenzungseinrichtung (13) aufweist, die in Reihe mit dem zeitgesteuerten Einlassventil angeschlossen ist.

7. Vorrichtung nach Anspruch 6, **dadurch gekennzeichnet, dass** der Sensor (36) ein leitender Sensor ist.

## Revendications

1. Procédé pour purifier de l'eau, dans lequel une entrée d'eau brute due à une pression accrue et à une filtration au moyen d'une osmose inversée, une ultra ou une nano filtration ou similaire, est divisée en un écoulement sortant d'eau purifiée et un écoulement rejeté circulant avec de l'eau non purifiée concentrée à partir duquel l'eau purifiée rejetée est déviée vers un drain d'eaux usées ou similaire, **caractérisé en ce que** lorsque l'eau purifiée a été vidée, un procédé de rinçage est initié, dans lequel l'eau brute sans augmentation de pression est ajoutée selon une quantité qui représente moins de deux fois la quantité d'eau non purifiée dans le circuit de circulation, et est principalement aussi importante que ladite quantité d'eau non purifiée, avant que le procédé de rinçage ne soit interrompu, dans lequel l'eau brute principalement sans dilution de l'eau non purifiée concentrée dans le circuit de circulation expulse une majeure partie de l'eau non purifiée vers les eaux usées,
alors que le procédé de rinçage est contrôlé par le contrôle de l'écoulement de l'eau rejetée dans ledit drain (32),
alors que l'écoulement d'eau rejetée est, dans une première étape, contrôlé au moyen d'une soupape de réglage de débit (33), de sorte que l'eau rejetée s'écoule sans être limitée vers le drain des eaux usées jusqu'à ce qu'une valeur prédéterminée de l'écoulement soit atteinte et de sorte que l'écoulement de l'eau rejetée dans le drain des eaux usées est ensuite très limité,
alors que l'écoulement d'eau rejetée est ensuite, dans une seconde étape, contrôlé en fonction de la concentration de contaminants mesurée avec un capteur (36) mesurant la contamination de l'écoulement rejeté circulant et une soupape commandée électriquement (34), de sorte que l'eau rejetée est autorisée à s'écouler dans le drain des eaux usées si la concentration de contaminants a atteint une valeur prédéterminée et jusqu'à ce que la concentration ait diminuée.

2. Procédé selon la revendication 1, **caractérisé en ce que** le procédé de rinçage est contrôlé de sorte que le procédé est activé après une période de temps prédéterminée après que l'eau purifiée a été vidée.

3. Dispositif pour réaliser le procédé selon la revendication 1, comprenant une entrée d'eau brute (10) qui, via une pompe de pressurisation (15), est raccordée à un boîtier de filtre (24) afin d'obtenir une pression accrue de l'eau dans le boîtier de filtre ; le boîtier de filtre contenant une entrée de filtre (23), un conduit de sortie (27) pour l'eau purifiée et une sortie de rejet (29) qui est raccordée à un premier conduit ramifié (20) raccordé à l'entrée de filtre (23) afin de former un conduit de circulation (19) pour l'eau non purifiée concentrée ; le circuit de circulation contenant également une pompe de circulation (21) et un second conduit ramifié (31) raccordé à un drain des eaux usées (32) pour faire sortir l'eau non purifiée, **caractérisé en ce que** le dispositif comprend des moyens pour le rinçage (12, 18, 30) dans lequel, lorsque les pompes (15, 21) ne sont pas activées, l'entrée d'eau brute est raccordée au circuit de circulation (19) et ainsi l'eau brute est forcée dans la direction allant vers et passant à travers l'entrée de filtre (23) afin d'expulser la majeure partie de l'eau non purifiée concentrée dans le circuit de circulation vers le drain des eaux usées (32) moyennant quoi le second conduit ramifié (31) raccordé au drain des eaux usées (32) est prévu avec une soupape de réglage de débit (33) et une soupape commandée électriquement (34) qui est commandée par un capteur (36) pour la teneur en contamination, raccordé au circuit de circulation (19), qui est situé dans la sortie de rejet d'eau (29).

4. Dispositif selon la revendication 3, **caractérisé en ce que** lesdits moyens (12, 18, 30) comprennent au moins une soupape.

5. Dispositif selon la revendication 3, **caractérisé en ce que** la soupape de réglage de débit (33) est raccordée parallèlement à la soupape commandée électriquement (34) et un premier limitateur d'écoulement (35) est raccordé en série avec la soupape commandée électriquement.

6. Dispositif selon l'une quelconque des revendications 3 à 5, **caractérisé en ce que** lesdits moyens (12, 18, 30) comprennent une soupape d'entrée commandée temporellement (12) et un second limiteur d'écoulement (13) raccordé en série avec la soupape d'entrée commandée temporellement.

7. Dispositif selon la revendication 6, **caractérisé en ce que** ledit capteur (36) est un capteur conducteur.
